# FASCICULE DE BREVET EUROPEEN

(11) **EP 3 060 604 B1**
(45) Date de publication et mention de la délivrance du brevet: **08.04.2020**
(21) Numéro de dépôt: 14786926.7
(22) Date de dépôt: 22.10.2014
(51) Int. Cl.: C08K 5/098, B60C 11/00, C08K 5/14, C08L 9/00, C08L 7/00

(54) **PNEUMATIQUE COMPRENANT UNE COMPOSITION COMPRENANT UN DERIVE DU DIACRYLATE DE ZINC ET UN PEROXYDE**
REIFEN MIT EINER ZUSAMMENSETZUNG MIT EINEM ZINKDIAKRYLATDERIVAT UND PEROXID
TYRE COMPRISING A COMPOSITION COMPRISING A ZINC DIACRYLATE DERIVATIVE AND A PEROXIDE

(30) Priorité: 22.10.2013 FR 1360286
(43) Date de publication de la demande: 31.08.2016
(73) Titulaire: Compagnie Générale des Etablissements Michelin, 63000 Clermont-Ferrand (FR)
(72) Inventeur: VASSEUR, Didier, F-63040 Clermont- Ferrand Cedex 9 (FR); CROCHET, Aurore, F-63040 Clermont- Ferrand Cedex 9 (FR)
(74) Mandataire: Wroblewski, Nicolas Paul André
(86) Numéro de dépôt international: PCT/EP2014/072602
(87) Numéro de publication internationale: WO 2015/059167

(56) Documents cités:
- EP-A1- 0 390 012
- WO-A1-03/066352
- WO-A1-2008/079107

## Description

L'invention est relative aux pneumatiques et plus particulièrement à ceux dont la composition de la bande de roulement comprend un dérivé du diacrylate de zinc et un peroxyde.

De telles compositions sont décrites dans certains documents de l'état de l'art, pour des objets qui ne sont pas des bandes de roulement de pneumatiques. Par exemple, le document US 2003/0065076 décrit des compositions pour chenilles de tank militaire, comprenant un élastomère, une charge renforçante, du diacrylate de zinc ou du diméthacrylate de zinc, et un peroxyde ; avec pour effet une amélioration de la résistance à l'abrasion. Dans ce document, le rapport entre les taux de peroxyde d'une part et de diacrylate de zinc ou de diméthacrylate de zinc d'autre part a pour valeur 0,1 ; 0,12 ou 0,15 selon les exemples.

De même, le document US 2005/0084638 décrit des compositions de mélanges de recouvrement d'un manchon à air pour suspensions, comprenant également un élastomère, une charge renforçante, du diacrylate de zinc et un peroxyde. Dans ce document, le rapport entre les taux de peroxyde et de diacrylate de zinc a pour valeur 0,15 ou 0,2 selon les exemples.

Dans le domaine spécifique des pneumatiques et plus particulièrement de leur bandes de roulement, depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique, cette contrainte étant particulièrement forte pour les bandes de roulement de pneumatique. Les manufacturiers ont développé des compositions de pneumatique permettant de diminuer cette résistance au roulement, de diverse façon et notamment par l'introduction de silice dans les mélanges comme charge renforçante.

Néanmoins, les manufacturiers cherchent toujours des solutions pour baisser encore la résistance au roulement des bandes de roulement de pneumatiques et c'est dans ce cadre que les demanderesses ont découvert de façon surprenante que l'hystérèse pouvait être nettement diminuée dans des compositions de caoutchouc pour pneumatique, avec un taux de charge renforçante réduit, la composition comprenant un dérivé du diacrylate de zinc et un peroxyde, à condition d'adopter un rapport entre le taux de peroxyde et le taux de dérivé du diacrylate de zinc adapté.

Par ailleurs, cette solution présente de nombreux autres avantages par rapport aux compositions de l'art antérieur et notamment une résistance au vieillissement améliorée en conditions thermiques et thermo-oxydantes.

L'invention concerne donc un pneumatique muni d'une bande de roulement comprenant une composition de caoutchouc à base d'au moins un élastomère diénique, un dérivé du diacrylate de zinc sous la forme d'un sel de zinc de formule (I) 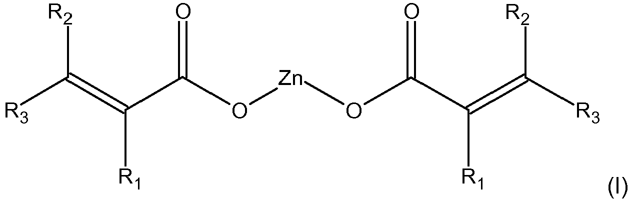 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique,
ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09, ladite composition ne comprenant pas de charge renforçante ou en comprenant moins de 50 pce, le rapport du taux de charge et du taux de dérivé de diacrylate de zinc étant inférieur ou égal à 2.

Préférentiellement, l'invention concerne un pneumatique tel que défini ci-dessus dans lequel R1, R2 et R3 représentent indépendamment un atome d'hydrogène ou un groupe méthyle. Plus préférentiellement, R2 et R3 représentent chacun un atome d'hydrogène. Plus préférentiellement également, R1 représente un groupe méthyle.

De préférence, l'invention concerne un pneumatique tel que défini ci-dessus dans lequel la quantité de dérivé du diacrylate de zinc dans la composition est comprise dans un domaine allant de 10 à 50 pce (parties en poids pour cent parties en poids d'élastomère), de préférence de 20 à 30 pce.

Préférentiellement, l'invention concerne un pneumatique tel que défini ci-dessus dans lequel le peroxyde dans la composition est un peroxyde organique, préférentiellement présent dans une quantité inférieure ou égale à 3 pce. Plus préférentiellement, la quantité de peroxyde dans la composition est comprise dans un domaine allant de 0,1 à 3 pce ; plus préférentiellement de 0,2 à 2 pce, et plus préférentiellement encore de 0,25 à 1 pce.

De manière préférentielle, l'invention concerne un pneumatique tel que défini ci-dessus dans lequel le rapport du taux de peroxyde et du taux de dérivé de diacrylate de zinc est inférieur ou égal à 0,05, de préférence inférieur ou égal à 0,04 et plus préférentiellement inférieur ou égal à 0,02.

Préférentiellement, l'invention concerne un pneumatique tel que défini ci-dessus dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. Plus préférentiellement, l'élastomère diénique est choisi dans le groupe constitué par les polybutadiènes, les polyisoprènes de synthèse, le caoutchouc naturel, les copolymères de butadiène et de styrène, les copolymères de butadiène et d'acrylonitrile, les copolymères d'isoprène et de styrène et les mélanges de ces élastomères.

De manière préférentielle, l'invention concerne un pneumatique tel que défini ci-dessus dans lequel le taux de charge renforçante est compris dans un domaine allant de 5 à 45 pce ; plus préférentiellement de 10 à 40 pce, mieux, de 15 à 35 pce.

De préférence, l'invention concerne un pneumatique tel que défini ci-dessus dans lequel la charge renforçante est du noir de carbone, de la silice ou un mélange de ces derniers. Préférentiellement, la charge renforçante est majoritairement constituée de noir de carbone.

Préférentiellement, l'invention concerne un pneumatique tel que défini ci-dessus dans lequel le rapport du taux de charge et du taux de dérivé de diacrylate de zinc est compris dans un domaine allant de 0,3 à 2, de préférence de 0,7 à 1,3.

De préférence, l'invention concerne un pneumatique tel que défini ci-dessus dans lequel la composition ne contient pas de soufre moléculaire ou d'agent donneur de soufre en tant qu'agent de vulcanisation ou en contient moins de 0,5 pce. Préférentiellement, la composition ne contient pas de soufre moléculaire ou d'agent donneur de soufre en tant qu'agent de vulcanisation ou en contient moins de 0,3 pce et de préférence moins de 0,1 pce. Préférentiellement, la composition ne contient pas d'accélérateur de vulcanisation.

De manière préférentielle, l'invention concerne un pneumatique tel que défini ci-dessus dans lequel la composition ne contient pas d'agent antioxydant.

De préférence également, l'invention concerne un pneumatique tel que défini ci-dessus dans lequel la composition comprend en outre un plastifiant, de préférence choisi parmi les résines plastifiantes, les huiles d'extension et leurs mélanges.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition de la bande de roulement

La composition de caoutchouc de la bande de roulement du pneumatique selon l'invention est à base des constituants suivants : un dérivé du diacrylate de zinc sous la forme d'un sel de zinc de formule (I) et un peroxyde, les taux de dérivé de diacrylate de zinc et de peroxyde étant tels que le rapport du taux de peroxyde et du taux de dérivé de diacrylate de zinc est inférieur ou égal à 0,09, ladite composition ne comprenant pas de charge renforçante ou en comprenant moins de 50 pce, le rapport du taux de charge et du taux de dérivé de diacrylate de zinc étant inférieur ou égal à 2.

Dans la présente demande, l'expression « pce » (« phr » en anglais) signifie de manière connue parties en poids pour cent parties en poids d'élastomère. On exprime ainsi la quantité en poids des constituants des compositions par rapport à la quantité totale d'élastomères en poids considérée par convention à la valeur cent.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Au sens de la présente invention et de manière connue de l'homme de l'art, on entend par bande de roulement la couche du pneumatique qui est en contact avec la surface de roulement. En effet, il est possible de définir au sein du pneumatique trois types de zones :
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.
- La zone radialement intérieure et en contact avec le gaz de gonflage, cette zone étant généralement constituée par la couche étanche aux gaz de gonflage, parfois appelée gomme intérieure (« inner liner » en anglais).
- La zone radialement extérieure et en contact avec l'air ambiant, cette zone étant essentiellement constituée de la bande de roulement et du flanc externe du pneumatique. La bande de roulement du pneumatique est disposée radialement au-dessus de la ceinture de pneumatique et constitue donc la couche en contact avec la surface de roulement.

### I-1 Elastomère diénique

Les compositions de bande de roulement du pneumatique de l'invention peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions de bande de roulement selon l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Dans le cas d'un élastomère NBR, on utilise notamment un NBR ayant une teneur en acrylonitrile comprise entre 15% et 40% en poids, une teneur en liaisons vinyliques de la partie butadiénique comprise entre 15% et 70%, une teneur (% molaire) en liaisons trans-1,4 comprise entre 15% et 75%.

Selon un mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### I-2 Dérivé du diacrylate de zinc

Le pneumatique selon l'invention est muni d'une bande de roulement qui comporte une composition qui comprend un dérivé du diacrylate de zinc sous la forme d'un sel de zinc de formule (I) 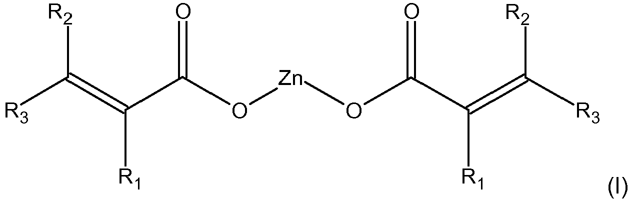 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique.

Par groupe alkyle cyclique, on entend un groupe alkyle comprenant un ou plusieurs cycles.

Par groupe ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Le ou les hétéroatomes peuvent être un atome d'azote, de soufre ou d'oxygène.

Préférentiellement, R1, R2 et R3 représentent indépendamment un atome d'hydrogène ou un groupe méthyle. Plus préférentiellement, R2 et R3 représentent chacun un atome d'hydrogène et selon une alternative également très préférentielle R1 représente un groupe méthyle.

Dans la composition de la bande de roulement du pneumatique selon l'invention, la quantité de dérivé du diacrylate de zinc est de préférence comprise dans un domaine allant de 10 à 50 pce, de préférence de 20 à 30 pce. Au-delà d'un taux de 50 pce la dispersion est moins bonne et les propriétés de la composition peuvent se dégrader tandis qu'en deçà d'un taux de 10 pce, l'effet du dérivé de diacrylate de zinc est moins notable sur la rigidification et le renforcement.

A titre d'exemple, on trouve dans le commerce des dérivés de diacrylate de zinc tels que le diacrylate de zinc (ZDA) « DIMALINK 633 » de la société CRAY VALLEY ou le diméthacrylate de zinc (ZDMA) « DIMALINK 634 » de la société CRAY VALLEY.

### I-3 Peroxyde

En plus de l'élastomère diénique et du dérivé de diacrylate de zinc précédemment décrits, la composition de la bande de roulement du pneumatique de l'invention utilise un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques, et en particulier un peroxyde choisi parmi le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et les mélanges de ces derniers.

Il existe dans le commerce divers produits conditionnes, connus sous leurs marques de fabrique; on peut citer:-le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. En effet, en dessous d'une quantité de 0,1 pce, l'effet du peroxyde n'est pas notable tandis qu'au-delà de 3 pce, les propriétés d'allongement rupture et donc de résistance de la composition sont diminuées. Plus préférentiellement, la quantité de peroxyde dans la composition est comprise dans un domaine allant de 0,2 à 2 pce, de préférence de 0,25 à 1 pce.

Quelles que soient les quantités de dérivé de diacrylate de zinc et de peroxyde vues ci-dessus, il est important pour l'invention que le rapport du taux de peroxyde et du taux de dérivé de diacrylate de zinc soit inférieur à 0,09. Au-delà, Au-delà d'un tel taux la synergie entre le dérivé de diacrylate de zinc et le peroxyde n'est pas aussi performante en termes d'effet sur la rhéométrie et sur l'allongement rupture, en particulier pour une composition soumise aux contraintes d'une bande de roulement. De préférence, le rapport du taux de peroxyde et du taux de dérivé de diacrylate de zinc est inférieur ou égal à 0,05, de préférence inférieur ou égal à 0,04 et plus préférentiellement inférieur ou égal à 0,02.

### I-4 Charge renforçante

L'élastomère diénique, le dérivé de diacrylate de zinc et le peroxyde sont suffisants à eux seuls pour que soit réalisée l'invention. Néanmoins, la composition de la bande de roulement du pneumatique selon l'invention peut comprendre une charge renforçante.

L'état physique sous lequel se présente la charge renforçante est indifférent, que ce soit sous forme de poudre, de microperles, de granulés, de billes ou toute autre forme densifiée appropriée.

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut également contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m²/g, plus préférentiellement comprise entre 60 et 300 m²/g.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

La fraction volumique de charge renforçante dans la composition de caoutchouc est définie comme étant le rapport du volume de la charge renforçante sur le volume de l'ensemble des constituants de la composition, étant entendu que le volume de l'ensemble des constituants est calculé en additionnant le volume de chacun des constituants de la composition. La fraction volumique de charge renforçante dans une composition est donc définie comme le rapport du volume de la charge renforçante sur la somme des volumes de chacun des constituants de la composition, et de préférence, cette fraction volumique est comprise entre 5 % et 20 %, préférentiellement entre 5 % et 15%. D'une manière préférentielle équivalente, le taux de charge renforçante totale (noir de carbone et/ou silice) est de moins de 50 pce, de préférence de 5 à 45 pce, plus préférentiellement de 10 à 40 pce et de manière très préférentielle, de 15 à 35 pce.

En effet, un avantage de l'invention est de permettre de réduire le taux de charge renforçante sans perdre en performance. Au-delà d'un taux de 50 pce, cet avantage n'est plus aussi grand et l'hystérèse de la composition augmente.

Ainsi, de préférence, le rapport du taux de charge et du taux de dérivé de diacrylate de zinc est compris dans un domaine allant de 0,3 à 2, de préférence de 0,7 à 1,3.

De préférence, la composition de la bande de roulement du pneumatique selon l'invention comprend du noir de carbone à titre majoritaire comme charge renforçante. Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Ces compositions peuvent optionnellement également contenir en complément des charges renforçantes, et en particulier lorsque de la silice est utilisée dans la composition de la bande de roulement du pneumatique selon l'invention, des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

A titre d'agent de couplage, on utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z-A-Sₓ-A-Z,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 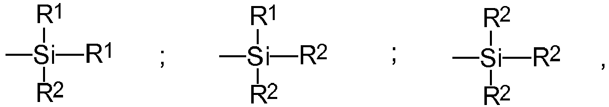
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (II) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc utiles à l'invention, la teneur en agent de couplage est préférentiellement comprise entre 2 et 15 pce, plus préférentiellement entre 3 et 13 et encore plus préférentiellement entre 5 et 10 pce.

### I-5 Système de vulcanisation

La composition de la bande de roulement du pneumatique selon l'invention ne nécessite pas de système de vulcanisation, ce qui est l'un de ses avantages puisque cela permet de simplifier la formule, et la préparation de la composition. Si cependant un système de vulcanisation est présent dans la composition, il l'est préférablement dans des quantités faibles explicitées plus bas.

Le système de vulcanisation proprement dit est habituellement à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre moléculaire (ou de manière équivalente les agents donneurs de soufre moléculaire), lorsqu'il est utilisé, l'est à un taux préférentiellement inférieur à 0,5 pce, de préférence inférieur à 0,3 pce, plus préférentiellement à un taux inférieur à 0,1 pce. De manière très préférentielle, la composition est dépourvue de soufre moléculaire.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Si un accélérateur est utilisé, il l'est à des taux tels que ceux pratiqués par l'homme du métier des compositions vulcanisées pour pneumatique. Néanmoins, la composition de la bande de roulement du pneumatique selon l'invention est préférentiellement dépourvue de tout accélérateur de vulcanisation.

### I-6 Autres additifs possibles

Les compositions de bande de roulement des pneumatiques conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Selon un mode préférentiel, la composition de la bande de roulement du pneumatique de l'invention est dépourvue d'agent anti-oxydant.

Selon un mode préférentiel, la composition de la bande de roulement du pneumatique de l'invention est dépourvue d'agent plastifiant. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

Lorsqu'il est inclus dans la composition, le taux d'agent plastifiant total est préférentiellement supérieur ou égal à 5 pce, plus préférentiellement de 5 à 100 pce, en particulier de 10 à 80 pce, par exemple de 15 à 70 pce.

Selon un premier mode de réalisation préférentiel de l'invention, le plastifiant est une huile d'extension liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (*Medium Extracted Solvates*), les huiles TDAE (*Treated Distillate Aromatic Extracts*), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un autre mode de réalisation préférentiel de l'invention, cet agent plastifiant est une résine hydrocarbonée thermoplastique dont la Tg est supérieure à 0°C, de préférence supérieure à 20°C. Cette résine est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; lp=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Il va de soi que l'invention concerne les pneumatiques munis des bandes de roulement comprenant les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation et notamment le peroxyde des compositions selon l'invention; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères et les charges renforçantes (et éventuellement les agents de couplage et/ou d'autres ingrédients), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation et notamment du peroxyde durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation et notamment le peroxyde, à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels que flancs, nappe carcasse, nappes sommet (ou ceinture de pneumatique), bande de roulement, bourrage tringle, sous-couche de bande de roulement ou d'autres couches d'élastomères, préférentiellement la bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### Propriétés dynamiques (après cuisson): Essai de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement M50, M100 et M300.

On mesure également les contraintes à la rupture (en MPa) et les allongements à la rupture (AR en %), à 23°C ± 2°C, selon la norme NF T 46-002. Les résultats sont exprimés « en base 100 » c'est à dire par rapport au témoin auquel une valeur 100 est attribuée.

Toutes ces mesures de traction sont effectuées dans les conditions normales de température (23±2°C) et d'hygrométrie (50±5% d'humidité relative), selon la norme française NF T 40-101 (décembre 1979).

Les propriétés dynamiques G*(10%) et tan(δ)max à 40°C sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 60°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 60°C.

On rappelle que, de manière bien connue de l'homme du métier, la valeur de tan(δ)max à 60°C est représentative de l'hystérèse du matériau donc de la résistance au roulement : plus tan(δ)max à 60°C est faible, plus la résistance au roulement est réduite.

### III-3 Exemples

### III-3-1 Exemple I

Cet exemple a pour objet de comparer les propriétés de caoutchouterie d'une composition témoin à des compositions conformes à l'invention. Les compositions testées sont présentées dans le tableau 1 ci-dessous.

**Tableau 1**

| | **T1** | **C1** | **C2** | **C3** | **C4** |
|---|---|---|---|---|---|
| BR (1) | 100 | 100 | 100 | 100 | 100 |
| Dérivé ZDA (2) | 20 | 20 | 20 | 20 | 20 |
| Peroxyde (3) | 2 | 1,5 | 1 | 0,4 | 0,2 |
| Peroxyde/dérivé ZDA | 0,1 | 0,075 | 0,05 | 0,02 | 0,01 |
| Charge (4) | 3 | 3 | 3 | 3 | 3 |
| charge/dérivé ZDA | 0,15 | 0,15 | 0,15 | 0,15 | 0,15 |
| ZnO (5) | 2 | 2 | 2 | 2 | 2 |

| | | | | | |
|---|---|---|---|---|---|
| (1) Polybutadiène comprenant 98% de cis 1-4 (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N234 (société Cabot) (5) Oxyde de zinc (grade industriel - société Umicore) | | | | | |

Le tableau 2 ci-dessous donne les propriétés mesurées pour les différentes compositions.

**Tableau 2**

| | T1 | C1 | C2 | C3 | C4 |
|---|---|---|---|---|---|
| AR (base 100) | 100 | 500 | 566 | 666 | 833 |

Par rapport à la composition témoin, on note que les compositions C1 à C4 présentent un allongement rupture très amélioré.

### III-3-2 Exemple II

Cet exemple a pour objet de comparer les différentes propriétés de caoutchouterie de compositions témoins à des compositions conformes à l'invention. Les compositions testées sont présentées dans le tableau 3 ci-dessous.

**Tableau 3**

| | **T1** | **T2** | **T3** | **C1** | **C2** | **C3** |
|---|---|---|---|---|---|---|
| NR (1) | 100 | 100 | 100 | 100 | 100 | 100 |
| Dérivé ZDA (2) | 20 | 20 | 20 | 20 | 20 | 20 |
| Peroxyde (3) | 3.5 | 3 | 2 | 1,5 | 1 | 0,75 |
| Peroxyde/dérivé ZDA | 0,175 | 0,15 | 0,1 | 0,075 | 0,05 | 0,037 |
| Charge (4) | 3 | 3 | 3 | 3 | 3 | 3 |
| charge/dérivé ZDA | 0,15 | 0,15 | 0,15 | 0,15 | 0,15 | 0,15 |
| ZnO (5) | 2 | 2 | 2 | 2 | 2 | 2 |

| | | | | | | |
|---|---|---|---|---|---|---|
| (1) Caoutchouc naturel (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N234 (société Cabot) (5) Oxyde de zinc (grade industriel - société Umicore) | | | | | | |

Le tableau 4 ci-dessous donne les propriétés mesurées pour les différentes compositions.

**Tableau 4**

| | T1 | T2 | T3 | C1 | C2 | C3 |
|---|---|---|---|---|---|---|
| AR (base 100) | 25 | 53 | 100 | 135 | 150 | 175 |

Par rapport aux compositions témoins, on note que les compositions C1, C2 et C3 présentent un allongement rupture très amélioré.

### III-3-3 Exemple III

Cet exemple a pour objet de comparer les différentes propriétés de caoutchouterie de compositions témoins à des compositions conformes à l'invention. Les compositions testées sont présentées dans le tableau 5 ci-dessous.

**Tableau 5**

| | **T1** | **T2** | **C1** | **C2** | **C3** | **C4** | **C5** | **C6** | **T3** |
|---|---|---|---|---|---|---|---|---|---|
| HNBR (1) | | | 100 | 100 | | | | | |
| NBR (2) | | | | | 100 | 100 | | | |
| NR (3) | 100 | 100 | | | | | 100 | 100 | 100 |
| Dérivé ZDA (4) | | | 20 | 15 | 20 | 15 | 20 | 20 | 20 |
| Peroxyde (5) | 1,5 | 1,5 | 1,5 | 1,5 | 1,5 | 1,5 | 1,5 | 1,5 | |
| Peroxyde/dérivé ZDA | | | 0,075 | 0,075 | 0,075 | 0,075 | 0,075 | 0,075 | 0 |
| Charge (6) | 54 | 20 | 3 | 20 | 3 | 20 | 3 | 20 | 20 |
| charge/dérivé ZDA | | | 0,15 | 1,3 | 0,15 | 1,3 | 0,15 | 1 | 1 |
| ZnO (7) | 2,4 | 2,4 | 2 | 2 | 2 | 2 | 2 | 2 | 2 |
| Acide Stéarique (8) | 2 | 2 | | | | | | | |
| Soufre | 1,1 | 1,1 | | | | | | | |
| Accélérateur (9) | 1,1 | 1,1 | | | | | | | |

| | | | | | | | | | |
|---|---|---|---|---|---|---|---|---|---|
| (1) Caoutchouc nitrile hydrogéné « Therban 3408 » de la société Lanxess, 34 % d'acrylonitrile (2) Caoutchouc nitrile « NBR 3370 » de la société Lanxess, 33% d'acrylonitrile (3) Caoutchouc naturel plastifié (4) Diméthacrylate de zinc (ZDMA) « DIMALINK 634 » de la société CRAY VALLEY (5) Peroxyde de dicumyl « Dicup » de la société Hercules (6) Noir de carbone grade ASTM N234 (société Cabot) (7) Oxyde de zinc (grade industriel - société Umicore) (8) Stéarine (« Pristerene 4931 » de la société Uniqema) (9) N-cyclohexyl-2-benzothiazol-sulfénamide (« Santocure CBS » de la société Flexsys) | | | | | | | | | |

Le tableau 6 ci-dessous donne les propriétés mesurées pour les différentes compositions.

**Tableau 6**

| | T1 | T2 | C1 | C2 | C3 | C4 | C5 | C6 | T3 |
|---|---|---|---|---|---|---|---|---|---|
| G* 10% -60°C | 2,25 | 0,9 | 1,92 | 2,64 | 2,18 | 2,96 | 1,14 | 1,65 | 0,2 |
| tan(δ)ₘₐₓ 60°C | 0,2 | 0,09 | 0,17 | 0,21 | 0,11 | 0,15 | 0,04 | 0,07 | 0,16 |
| M300 | 3,17 | 1,13 | 2,21 | 3,08 | / | / | 2,53 | 4,56 | 0,5 |
| AR | 100 | 121 | 82 | 100 | 50 | 51 | 88 | 86 | 78 |

Les compositions C1 à C6 présentent des niveaux de rigidité proches d'un mélange témoin conventionnel avec un taux de charge usuel (T1) et sont bien plus rigides qu'un mélange similaire au témoin T1 mais avec faible taux de charge (T2). Il est à noter qu'à performance équivalente des mélanges conventionnels à taux de charge usuel, les compositions de l'invention permettent une hystérèse diminuée voire très fortement diminuée. Ceci permet de fabriquer des pneumatiques à faible résistance au roulement tout en conservant néanmoins de bonnes propriétés mécaniques. Comparé en base 100, on peut noter que l'allongement rupture des compositions de l'invention baisse par rapport à un mélange conventionnel à taux de charge usuel, cependant le niveau de l'allongement rupture dans les compositions de l'invention reste tout à fait compatible avec une utilisation en bande de roulement de pneumatique. La composition T3 dépourvue de peroxyde présente une rigidité G*10% et un renforcement (M300) très faibles.

## Revendications

1. Pneumatique muni d'une bande de roulement, ladite bande de roulement comprenant une composition de caoutchouc à base d'au moins un élastomère diénique, un dérivé du diacrylate de zinc sous la forme d'un sel de zinc de formule (I) 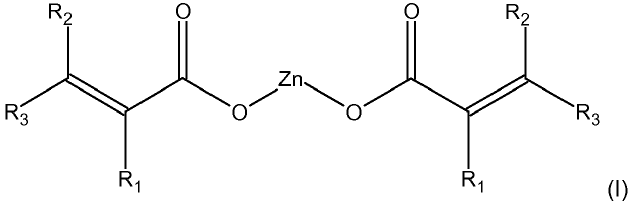
dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique,
ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09,
ladite composition ne comprenant pas de charge renforçante ou en comprenant moins de 50 pce, le rapport du taux de charge et du taux de dérivé de diacrylate de zinc étant inférieur ou égal à 2.

2. Pneumatique selon la revendication 1, dans lequel R1, R2 et R3 représentent indépendamment un atome d'hydrogène ou un groupe méthyle.

3. Pneumatique selon l'une quelconque des revendications précédentes, dans lequel R2 et R3 représentent chacun un atome d'hydrogène.

4. Pneumatique selon l'une quelconque des revendications précédentes, dans lequel R1 représente un groupe méthyle.

5. Pneumatique selon l'une quelconque des revendications précédentes, dans lequel la quantité de dérivé du diacrylate de zinc dans la composition est comprise dans un domaine allant de 10 à 50 pce (parties en poids pour cent parties en poids d'élastomère), de préférence de 20 à 30 pce.

6. Pneumatique selon l'une quelconque des revendications précédentes, dans lequel le peroxyde dans la composition est un peroxyde organique.

7. Pneumatique selon l'une quelconque des revendications précédentes, dans lequel la quantité de peroxyde dans la composition est inférieure ou égale à 3 pce, de préférence comprise dans un domaine allant de 0,1 à 3 pce, plus préférentiellement de 0,25 à 1 pce.

8. Pneumatique selon l'une quelconque des revendications précédentes, dans lequel le rapport du taux de peroxyde et du taux de dérivé de diacrylate de zinc est inférieur ou égal à 0,05, de préférence inférieur ou égal à 0,04 et plus préférentiellement inférieur ou égal à 0,02.

9. Pneumatique selon l'une quelconque des revendications précédentes dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

10. Pneumatique selon l'une quelconque des revendications précédentes, dans lequel le taux de charge renforçante est compris dans un domaine allant de 5 à 45 pce de préférence de 15 à 35 pce.

11. Pneumatique selon l'une quelconque des revendications précédentes dans lequel la charge renforçante est du noir de carbone, de la silice ou un mélange de ces derniers, de préférence la charge renforçante est majoritairement constituée de noir de carbone.

12. Pneumatique selon l'une quelconque des revendications précédentes dans lequel le rapport du taux de charge et du taux de dérivé de diacrylate de zinc est compris dans un domaine allant de 0,3 à 2, de préférence de 0,7 à 1,3.

13. Pneumatique selon l'une quelconque des revendications précédentes dans lequel la composition ne contient pas de soufre moléculaire ou d'agent donneur de soufre en tant qu'agent de vulcanisation ou en contient moins de 0,5 pce, de préférence moins de 0,1 pce.

14. Pneumatique selon l'une quelconque des revendications précédentes dans lequel la composition ne contient pas d'accélérateur de vulcanisation et/ou ne contient pas d'agent antioxydant.

15. Pneumatique selon l'une des revendications précédentes dans lequel la composition comprend en outre un plastifiant, de préférence choisi parmi les résines plastifiantes, les huiles d'extension et leurs mélanges.

## Patentansprüche

1. Reifen, ausgestattet mit einer Rollfläche, wobei die Rollfläche eine Kautschukzusammensetzung umfasst, basierend auf mindestens einem Dien-Elastomer, einem Zinkdiacrylat-Derivat in Form eines Zinksalzes der Formel (I): 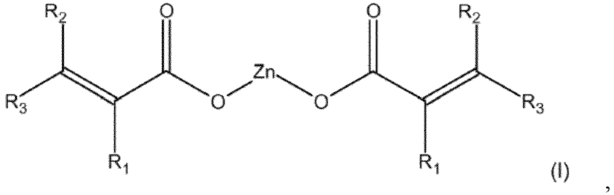
worin R1, R2 und R3 unabhängig ein Wasserstoffatom oder eine C1-C7-Kohlenwasserstoffgruppe, ausgewählt aus geraden, verzweigten oder cyclischen Alkylgruppen, Aralkylgruppen, Alkylarylgruppen und Arylgruppen, die gegebenenfalls durch ein oder mehrere Heteroatome unterbrochen sind, darstellen,
wobei R2 und R3 miteinander einen nicht-aromatischen Ring bilden können,
wobei die Zusammensetzung ferner ein Peroxid umfasst, wobei die Anteile an Zinkdiacrylat-Derivat und Peroxid derart sind, dass das Verhältnis des Anteils an Peroxid zum Anteil an Zinkdiacrylat-Derivat kleiner als oder gleich 0,09 ist,
wobei die Zusammensetzung keinen verstärkenden Füllstoff umfasst oder davon weniger als 50 phr umfasst, wobei das Verhältnis des Anteils an Füllstoff zum Anteil an Zinkdiacrylat-Derivat kleiner als oder gleich 2 ist.

2. Reifen nach Anspruch 1, wobei R1, R2 und R3 unabhängig ein Wasserstoffatom oder eine Methylgruppe darstellen.

3. Reifen nach einem der vorhergehenden Ansprüche, wobei R2 und R3 jeweils ein Wasserstoffatom darstellen.

4. Reifen nach einem der vorhergehenden Ansprüche, wobei R1 eine Methylgruppe darstellt.

5. Reifen nach einem der vorhergehenden Ansprüche, wobei die Menge an Zinkdiacrylat-Derivat in der Zusammensetzung in einem Bereich von 10 bis 50 phr (Masseteile pro hundert Masseteile Elastomer), vorzugsweise von 20 bis 30 phr, liegt.

6. Reifen nach einem der vorhergehenden Ansprüche, wobei das Peroxid in der Zusammensetzung ein organisches Peroxid ist.

7. Reifen nach einem der vorhergehenden Ansprüche, wobei die Menge an Peroxid in der Zusammensetzung kleiner als oder gleich 3 phr ist, vorzugsweise in einem Bereich von 0,1 bis 3 phr, insbesondere von 0,25 bis 1 phr, liegt.

8. Reifen nach einem der vorhergehenden Ansprüche, wobei das Verhältnis des Anteils an Peroxid zum Anteil an Zinkdiacrylat-Derivat kleiner als oder gleich 0,05, vorzugsweise kleiner als oder gleich 0,04 und insbesondere kleiner als oder gleich 0,02, beträgt.

9. Reifen nach einem der vorhergehenden Ansprüche, wobei das Dien-Elastomer aus der Gruppe bestehend aus Polybutadienen, synthetischen Polyisoprenen, Naturkautschuk, Butadien-Copolymeren, Isopren-Copolymeren und Gemischen dieser Elastomere ausgewählt ist.

10. Reifen nach einem der vorhergehenden Ansprüche, wobei der Anteil an verstärkendem Füllstoff in einem Bereich von 5 bis 45 phr, vorzugsweise von 15 bis 35 phr, liegt.

11. Reifen nach einem der vorhergehenden Ansprüche, wobei der verstärkende Füllstoff Ruß, Siliziumdioxid oder ein Gemisch davon ist, wobei der verstärkende Füllstoff vorzugsweise größtenteils aus Ruß besteht.

12. Reifen nach einem der vorhergehenden Ansprüche, wobei das Verhältnis des Anteils an Füllstoff zum Anteil an Zinkdiacrylat-Derivat in einem Bereich von 0,3 bis 2, vorzugsweise von 0,7 bis 1,3, liegt.

13. Reifen nach einem der vorhergehenden Ansprüche, wobei die Zusammensetzung keinen molekularen Schwefel oder keinen Schwefeldonor als Vulkanisierungsmittel enthält oder davon weniger als 0,5 phr, vorzugsweise weniger als 0,1 phr, enthält.

14. Reifen nach einem der vorhergehenden Ansprüche, wobei die Zusammensetzung keinen Vulkanisationsbeschleuniger enthält und/oder kein Antioxidationsmittel enthält.

15. Reifen nach einem der vorhergehenden Ansprüche, wobei die Zusammensetzung auch einen Weichmacher umfasst, der vorzugsweise unter Weichharzen, Streckölen und Gemischen davon ausgewählt ist.

## Claims

1. Tyre provided with a tread, said tread comprising a rubber composition based on at least one diene elastomer, a zinc diacrylate derivative in the form of a zinc salt of formula (I) 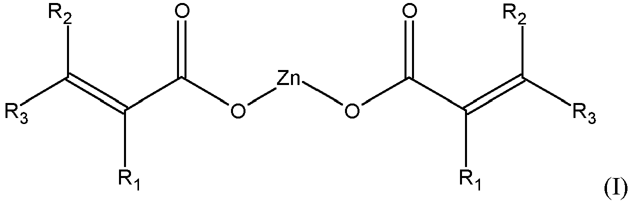
in which R1, R2 and R3 independently represent a hydrogen atom or a C1-C7 hydrocarbon group selected from linear, branched or cyclic alkyl groups, aralkyl groups, alkylaryl groups and aryl groups, which are optionally interrupted by one or more heteroatoms, it being possible for R2 and R3 to form together a non-aromatic ring,
said composition additionally comprising a peroxide, the contents of zinc diacrylate derivative and of peroxide being such that the ratio of the peroxide content to the zinc diacrylate derivative content is less than or equal to 0.09,
said composition comprising no reinforcing filler or comprising less than 50 phr thereof, the ratio of the filler content to the zinc diacrylate derivative content being less than or equal to 2.

2. Tyre according to Claim 1, wherein R1, R2 and R3 independently represent a hydrogen atom or a methyl group.

3. Tyre according to either one of the preceding claims, wherein R2 and R3 each represent a hydrogen atom.

4. Tyre according to any one of the preceding claims, wherein R1 represents a methyl group.

5. Tyre according to any one of the preceding claims, wherein the amount of zinc diacrylate derivative in the composition is within a range extending from 10 to 50 phr (parts by weight per hundred parts by weight of elastomer), preferably from 20 to 30 phr.

6. Tyre according to any one of the preceding claims, wherein the peroxide in the composition is an organic peroxide.

7. Tyre according to any one of the preceding claims, wherein the amount of peroxide in the composition is less than or equal to 3 phr, preferably within a range extending from 0.1 to 3 phr, more preferably from 0.25 to 1 phr.

8. Tyre according to any one of the preceding claims, wherein the ratio of the peroxide content to the zinc diacrylate derivative content is less than or equal to 0.05, preferably less than or equal to 0.04 and more preferably less than or equal to 0.02.

9. Tyre according to any one of the preceding claims, wherein the diene elastomer is selected from the group consisting of polybutadienes, synthetic polyisoprenes, natural rubber, butadiene copolymers, isoprene copolymers and mixtures of these elastomers.

10. Tyre according to any one of the preceding claims, wherein the content of reinforcing filler is within a range extending from 5 to 45 phr, preferably from 15 to 35 phr.

11. Tyre according to any one of the preceding claims, wherein the reinforcing filler is carbon black, silica or a mixture of the latter, preferably the reinforcing filler predominantly consists of carbon black.

12. Tyre according to any one of the preceding claims, wherein the ratio of the filler content to the zinc diacrylate derivative content is within a range extending from 0.3 to 2, preferably from 0.7 to 1.3.

13. Tyre according to any one of the preceding claims, wherein the composition contains no molecular sulphur or sulphur donor as vulcanizing agent or contains less than 0.5 phr thereof, preferably less than 0.1 phr thereof.

14. Tyre according to any one of the preceding claims, wherein the composition contains no vulcanization accelerator and/or contains no antioxidant.

15. Tyre according to one of the preceding claims, wherein the composition additionally comprises a plasticizer, preferably selected from plasticizing resins, extender oils and mixtures thereof.
